# EUROPEAN PATENT SPECIFICATION

(11) **EP 2 296 914 B1**
(45) Date of publication and mention of the grant of the patent: **14.12.2011**
(21) Application number: 09757100.4
(22) Date of filing: 01.06.2009
(51) Int. Cl.: B44F 1/04, A44C 17/00, B44C 5/04, B44C 5/06, C03C 17/36

(54) **A DECORATIVE SUBSTRATE, ESPECIALLY AN ARTIFICIAL JEWELLERY STONE WITH A COLOUR EFFECT AND METHOD FOR ACHIEVING THE COLOUR EFFECT FOR A TRANSPARENT SUBSTRATE**
ZIERSUBSTRAT, INSBESONDERE KÜNSTLICHER SCHMUCKSTEIN MIT FARBEFFEKT, UND VERFAHREN ZUM ERZIELEN DES FARBEFFEKTS FÜR EIN TRANSPARENTES SUBSTRAT
SUBSTRAT DÉCORATIF, EN PARTICULIER GEMME DE VERRE, AVEC UN EFFET DE COULEUR, ET PROCÉDÉ POUR PRODUIRE L'EFFET DE COULEUR DANS LE SUBSTRAT TRANSPARENT

(30) Priority: 02.06.2008 CZ 20080339
(43) Date of publication of application: 23.03.2011
(73) Proprietor: Preciosa, A.S., 466 67 Jablonec nad Nisou (CZ)
(72) Inventor: KREJCI, Radomir, 463 03 Straz n.Nisou (CZ); PETRYDES, David, Rádlo 300 (CZ); NEKVINDA, Milan, 460 02 Liberec (CZ)
(74) Representative: Pavlica, Tomas
(86) International application number: PCT/CZ2009/000075
(87) International publication number: WO 2009/146666

(56) References cited:
- DE-C1- 4 204 763
- US-A1- 2004 053 068
- US-A1- 2004 083 759

## Description

### Field of the invention

The invention concerns a decorative substrate, the substrate being especially an artificial jewellery stone having a colour effect, especially the effect simulating a colouration of natural gems. The invention concerns further a method for achieving such a colour effect of a decorative transparent substrate. The term "a transparent substrate" should be understood within the scope of this invention as any product which is transparent for the visible region of light. Such a transparent substrate can be formed especially by an artificial jewellery stone, advantageously by a transparent costume jewellery stone made artificially, for example by a glass or plastic artificial jewellery stone which is advantageously not coloured by any technology. For simplification purposes of the following description, the invention will be further described in respect of a transparent artificial jewellery stone, even if all what is said here in this context will be valid also for other transparent substrates as defined above. As far as concerns the colour effect which should be achieved for the transparent substrate, the matter concerns a colour effect which does not change its colour under observation at different angles from the side on which this colour effect should be manifested, i.e. from the side which is visible for the observer. This visible side will be further mentioned as the front side of the decorative substrate, the opposite side without manifesting the colour effect will be here mentioned as the back side of the decorative substrate.

### Background of the invention

The fundamental motivation of colouring artificial stones, i.e. of artificially made transparent costume and jewellery stones, is the effort to achieve colouring of these stones which is typical for natural semi-precious and precious stones. A technology how to achieve it is the technology of colouring artificial jewellery stones within the mass. For example, this technology used for glass artificial jewellery stones consists in the fact that a colouring agent is added into the glass batch for producing the stone, the colouring agent when absorbing the part of the visible light causes the desired colouration of the artificial jewellery stone. The inconvenience of this colouring method of artificial jewellery stones is particularly the fact that this method demands great costs concerning economy and energy. On the one hand, it is necessary to use relatively a great quantity of a first-rate and relatively valuable colouring agent for colouring the whole mass of the glass batch, on the other hand it is necessary to mix this agent very uniformly into the glass batch, a great quantity of energy being necessary for this operation. Another disadvantage is also the fact that in order to achieve the same colouring for different sizes of stones, it is necessary to have always a specific formula for each narrow sized category of artificial jewellery stones. The number of such formulas exceeds then many times the number of catalogue colours, often being also very difficult to achieve the reproducibility of colouring. Some colour shades can be achieved in such case even after a secondary thermal treatment of the manufactured glass, the heat treating process being here a further cause of irregularities in the reproducibility of colouring.

One method for colouring the jewellery stones is diffusion of ions, for example diffusion of titan, iron or cobalt into the jewellery stone. Nevertheless, such diffusion processes, described for example in US - patents 2,690,630 and 4,039,726, are traditionally limited to specific ions and specific transparent substrates, such substrates being for example sapphire and topaz. Moreover, these diffusion processes are executed at extremely high temperatures what causes often fissures or other damaging of the jewellery stone, the processes demanding also long processing times, for example longer than one day.

Another method is to colour the surface of the artificial jewellery stone by organic colours, for example when using the sol-gel technology. Nevertheless, this technology does not bring sufficiently long-lasting colour layers and devalues the optical effect reached by machine grinding and polishing.

At last time, the attention is drawn to colour colourless jewellery stones or to modify colours of jewellery stones by depositing a highly absorbing layer onto the back side of the stones, the layer being formed by one or more partial layers absorbing some regions of visible light what brings a corresponding colouring of jewellery stone. This technology of absorption coverings is described for example in the US - patent document No. 5,853,826. There is mentioned an unspecified combination of absorption layers with a layer having a high refractive index which causes also a partial reflection of light but a significant part of light passes through this layer. Nevertheless, the inconvenience of this solution is the fact that stones coloured in this way have a shade changing together with the change of the angle of observing. A similar technology of absorption layers producing a shade which does not change together with the angle of observing is described for example in the US - patent document No. 7,137,275 B2, the desired effect being achieved in this case by coating with transparent or partly transparent layers, i.e. layers which are at least partly permeable for such parts of visible light which were not absorbed by the said highly absorbing coating. A certain part of light can under certain geometrical conditions pass through the stone without any contribution to the colouring and brilliance of the stone. Jewellery stones are regularly designed in respect of the high refraction index of materials from which they are produced in the way to use in a maximum measure the total reflection on the optical interface, this being different from stones made of materials with a lower refraction index, e.g. made of glass where it is reasonable to use a specially coated reflexion layer on the back side of stone. US 2004/083759 discloses a jewellery stone with an optically modyfying layer of 10-1500 nm of an oxide and another layer of similar composition.

### Subject of the invention

The subject matter of this invention consists in coating the back side of the substrate, especially of a jewellery stone with a system of at least two optically functioning layers, the layer more distant from the back side of the coated substrate (further only the reflexion layer) has a zero transmittance for the region of visible light and reflects a maximum possible quantity of visible light in dependence on the spectral reflectivity of the material back into the stone, while the layer near to the back side of the substrate (further only the optically modifying layer) has a selective absorption for some components of visible light and further modifies substantially the resulting colour tone of the light delivering the stone, also the interference of the reflected light can further participate in this modification in respect of the used thickness of the optically modifying layer. The invention is so formed by the said combination of the optically modifying layer and of the reflexion layer what ensures a colour selective reflexion of the visible light back into the stone and from there to the observer by means of the interaction of the visible light with these layers.

The object of this invention is therefore a decorative substrate, especially an artificial jewellery stone having a colour effect, the subject matter of it consisting in the fact that it is formed by a transparent substrate which comprises the following layers on the back side deposited in the following order from the back side of the substrate: an optically modifying layer with a thickness of 2 to 80 nm, the layer being formed by at least one element or by an oxide from a group including Ge, Si and oxides of Ti, Zr, Nb and Al, which are alternatively doped by further elements, then a reflexion layer formed by at least one metal or by an alloy from a group including Au, Ag, Cu, Al, Cr, Ti, aluminium bronzes comprising in addition to Al and Cu further elements more, especially Fe, Ni, e.g. CuAl10Fe1, CuA110Ni5Fe4 and alloys of Au, Ag and Cu having a thickness ensuring a zero transmission and reflection of the maximum possible part of the impingent visible light in dependence on the spectral reflectivity of the material from which the reflection layer is made back into the transparent substrate, then an interposed layer having a thickness of 10 to 100 nm, this layer protecting the reflection layer and ensuring a high adhesion of varnish, this layer being formed by at least one metal from a group including Ti, Cr and Cu, and then a layer of a protecting varnish.

Advantageously the decorative substrate comprises between the optically modifying layer and the reflection layer an adhesive layer with a thickness of 2 to 15 nm, the adhesive layer being formed by at least one oxide of a metal from a group of metals including Al, Ti, Zr and Sn and enhancing the mutual adhesion of the reflection layer and of the optically modifying layer.

The optically modifying layer has advantageously a thickness of 15 to 40 nm.

The reflection layer has advantageously a thickness of 60 to 200 nm, more advantageously 90 to 140 nm.

The interposed layer has advantageously a thickness of 20 to 60 nm.

The adhesive layer has advantageously a thickness of 3 to 10 nm.

The object of the invention is also a method for achieving a colour effect for a decorative transparent substrate, especially for an artificial jewellery stone, the subject matter of the invention consisting in the fact that, advantageously by the method of vacuum sputtering, the back side of the transparent substrate should be coated with the following layers deposited in the following order from the back side of the transparent substrate: an optically modifying layer with a thickness of 2 to 80 nm, the layer being formed by at least one element or by an oxide from a group including Ge, Si and oxides of Ti, Zr, Nb and Al, which are alternatively doped by further elements, then a reflexion layer formed by at least one metal or by an alloy from a group including Au, Ag, Cu, Al, Cr, Ti, aluminium bronzes comprising in addition to Al and Cu further elements (Fe, Ni) more, e.g. CuAl10Fe1, CuAl10Ni5Fe4 and alloys of Au, Ag and Cu having a thickness ensuring a zero transmission and reflection of the maximum possible part of the impingent visible light in dependence on the spectral reflectivity of the material from which the reflection layer is made back into the transparent substrate, then an interposed layer having a thickness of 10 to 100 nm, this layer protecting the reflection layer and ensuring a high adhesion of varnish, this layer being formed by at least one metal from a group including Ti, Cr and Cu, and then the back side should be coated by a layer of a protecting varnish.

Advantageously an adhesive layer with a thickness of 2 to 15 nm should be deposited by vacuum sputtering between the optically modifying layer and the reflection layer, the adhesive layer being formed by at least one oxide of a metal from a group of metals including Al, Ti, Zr and Sn.

The decorative substrate with deposited layers should be advantageously thermally treated at a temperature higher that 150° C but lower than the temperature at which a damage of any of layers or an unintended interaction between the layers can occur, the thermal treatment lasting 0.5 to 8 hours, more advantageously at a temperature from 160 to 280° C lasting 0.5 to 2 hours.

The optically modifying layer should be advantageously deposited with a thickness of 15 to 40 nm.

The reflection layer should be advantageously deposited with a thickness of 60 to 200 nm, more advantageously with the thickness of 90 to 140 nm.

The interposed layer should be advantageously deposited with a thickness of 20 to 60 nm.

The adhesive layer should be advantageously deposited with a thickness of 3 to 10 nm.

The method for achieving a colour effect for a decorative transparent substrate according to the invention represents a very effective system for colouring transparent substrates which maintains all advantages achieved with colouring transparent substrates within the scope of the existing state of art by depositing highly absorbing layers onto the back side of the substrate, the advantages consisting especially in the fact that the given composition of absorption layers brings the same colouring of the substrate, independent on the angle of observing and regardless of the size of the substrate, and also the fact that the sharpness of edges and the smoothness of the surface reached by machine grinding and polishing of the front side of the decorative substrate is maintained, moreover this brings a high saturation of colouring and brilliance of the decorative substrate. This is achieved by the fact that successive layers comprised on the back side of the decorative substrate according to the invention, enter into an interaction together with the white light. According to the character of these layers, absorption, reflection and interference occur on these layers, the resulting effect being reached by a combination of these phenomenons. Moreover, when using a transparent but colour substrate, further combinations of colours are reached while advantages offered by the invention are maintained. Said combinations of colours are caused by a combination of mentioned phenomenons with the absorption of a part of the spectre by the colour transparent substrate. It is possible to achieve a specific colouring by selection of respective absorption components so as by their quantity used in the optically modifying layer, and by selection of the material of the reflection layer.

The interposed layer acts as a protection for the reflection layer and as means for achieving good adhesion of the protective varnish layer to the reflection layer. The task of the successive thermal treatment of the decorative substrate, if demanded, is to achieve a better colour stability, a better cohesion and adhesion of individual layers. This thermal treatment is executed at temperatures mentioned above and for a time as defined above. To rise the temperature to the mentioned thermal treatment temperature and to lower the temperature after the thermal treatment can be executed when using a temperature regime which is given by the character of the transparent substrate and of the used layers, so as by the experience of the personnel providing the thermal treatment.

The invention will be made clearer in the following part of the specification with the aid of factual examples of its execution while these examples do not limit in any way the scope of invention which is unambiguously defined by the claims.

### Examples of executing the invention

### Example 1

The back side of a grinded and polished glass stone made from a colourless parison has been successively covered by an optically modifying layer, by a reflection layer and by an interposed layer. The optically modifying layer is formed by titanium oxide with the thickness of 40 nm. This layer can be created by a reactive magnetron sputtering from a titanium target in an atmosphere of argon and oxygen, the pressure being 0.5 Pa. The reflection layer is formed by silver with the thickness of 80 nm and ensures reflection of maximum possible quantity of impinging light. This layer can be created by sputtering from a silver target in an inert argon atmosphere having the pressure of 0.5 Pa. The interposed layer is formed by titanium with the thickness of 80 nm. This layer can be created by sputtering from a titanium target in an inert argon atmosphere with the pressure of 0.5 Pa. A deposition laboratory equipment working on the principle of magnetron sputtering was used to form said layers. The deposition of all mentioned layers was executed in one vacuum cycle. A layer of protective varnish formed by urethane alkyd with a plate pigment was sprayed after said operations in the paint shop cabin on the interposed layer, the plate pigment in a quantity offering after drying a layer of protective varnish with the thickness 15 µm. The glass stone was then burned for 1 hour at the temperature of 180° C. The multilayer system achieved in such a way brings a glass stone with a blue tone.

### Example 2

The back side of a grinded and polished glass stone made from a colourless parison has been successively covered by an optically modifying layer, by an adhesion layer, by a reflection layer and by an interposed layer. The optically modifying layer is formed by titanium oxide with the thickness of 50 nm. This layer can be created by a reactive magnetron sputtering from a titanium target in an atmosphere of argon and oxygen, the pressure being 0.5 Pa. The adhesion layer is formed by aluminium oxide having the thickness of 3 nm. The reflection layer is formed by aluminium bronze CuA110Fe1 with the thickness of 100 nm. This layer can be created by sputtering from an alloy target in an inert argon atmosphere having the pressure of 0.5 Pa. The interposed layer is formed by titanium with the thickness of 40 nm. This layer can be created by sputtering from a titanium target in an inert argon atmosphere with the pressure of 0.5 Pa. A deposition laboratory equipment working on the principle of magnetron sputtering was used to form said layers. The deposition of all mentioned layers was executed in one vacuum cycle. A layer of protective varnish formed by urethane alkyd with a plate pigment was then sprayed on the interposed layer after said operations in the paint shop cabin, the plate pigment in a quantity offering after drying a layer of protective varnish with the thickness 15 µm. The glass stone was then burned for 1 hour at the temperature of 180° C. The multilayer system achieved in such a way brings a glass stone with a brown tone.

## Claims

1. A decorative substrate, especially an artificial jewellery stone having a colour effect, formed by a transparent substrate which comprises layers on its back side where the layers are deposited and positioned in the following order from the back side of the substrate: an optically modifying layer with a thickness of 2 to 80 nm, the layer being formed by at least one element or by an oxide from a group including Ge, Si and oxides of Ti, Zr, Nb and Al, which are alternatively doped by further elements, then a reflexion layer formed by at least one metal or by an alloy from a group including Au, Ag, Cu, Al, Cr, Ti, aluminium bronzes and alloys of Au, Ag and Cu and having a thickness ensuring maximum possible reflection of the impingent visible light in dependence on the spectral reflectivity of the material from which the reflection layer is made back into the transparent substrate, then an interposed layer having a thickness of 10 to 100 nm, this layer being formed by at least one metal from a group including Ti, Cr and Cu, and then a layer of a protecting varnish.

2. The decorative substrate according to claim 1, **characterized in that** it comprises between the optically modifying layer and the reflection layer an adhesive layer with a thickness of 2 to 15 nm, formed at least by one metal oxide from a group of metals including Al, Ti, Zr and Sn.

3. The decorative substrate according to claim 1, **characterized in that** the optically modifying layer has a thickness of 15 to 40 nm.

4. The decorative substrate according to claim 1, **characterized in that** the reflection layer has a thickness of 60 to 200 nm.

5. The decorative substrate according to claim 4, **characterized in that** the reflection layer has a thickness of 90 to 140 nm.

6. The decorative substrate according to claim 1, **characterized in that** the interposed layer has a thickness of 20 to 60 nm.

7. The decorative substrate according to claim 2, **characterized in that** the adhesive layer has a thickness of 3 to 10 nm.

8. A method for achieving a colour effect for a decorative transparent substrate, especially for an artificial jewellery stone, designed to gain the decorative substrate according to some of claims 1 to 7, wherein the back side of the transparent substrate is coated by vacuum sputtering with the following layers deposited in the following order from the back side of the transparent substrate: an optically modifying layer with a thickness of 2 to 80 nm, the layer being formed by at least one element or by an oxide from a group including Ge, Si and oxides of Ti, Zr, Nb and Al, which are alternatively doped by further elements, then a reflexion layer formed by at least one metal or by an alloy from a group including Au, Ag, Cu, Al, Cr, Ti, aluminium bronzes and alloys of Au, Ag and Cu and having a thickness ensuring maximum possible reflection of the impingent visible light in dependence on the spectral reflectivity of the material from which the reflection layer is made back into the transparent substrate, then an interposed layer having a thickness of 10 to 100 nm, this layer being formed by at least one metal from a group including Ti, Cr and Cu, and then the back side is coated by a layer of a protecting varnish.

9. The method according to claim 8, **characterized in that** between the optically modifying layer and the reflection layer is deposited by vacuum sputtering an adhesive layer with a thickness of 2 to 15 nm, formed at least by one metal oxide from a group of metals including Al, Ti, Zr and Sn.

10. The method according to claim 8 or 9, **characterized in that** the decorative substrate with deposited layers is subjected to a thermal treatment lasting 0.5 to 8 hours at a temperature higher than 150° C but lower than the temperature which can cause a damaging of any of layers or an undesired interaction between the layers.

11. The method according to claim 10, **characterized in that** the decorative substrate with deposited layers is subjected to a thermal treatment lasting 0.5 to 2 hours at a temperature 160° C to 280° C.

12. The method according to claim 8, **characterized in that** the optically modifying layer is deposited with a thickness of 15 to 40 nm.

13. The method according to claim 8, **characterized in that** the reflection layer is deposited with a thickness of 60 to 200 nm, especially with a thickness 90 to 140 nm.

14. The method according to claim 8, **characterized in that** the interposed layer is deposited with a thickness of 20 to 60 nm.

15. The method according to claim 9, **characterized in that** the adhesive layer is deposited with a thickness of 3 to 10 nm.

## Patentansprüche

1. Dekoratives Substrat, insbesondere für einen künstlichen Edelstein mit farbigem Effekt, gebildet durch ein transparentes Substrat, das an seiner Hinterseite Schichten enthält, wo die Schichten hingesetzt und platziert in folgender Anordnung beginnend von der Hinterseite des Substrats sind: eine optisch modifizierende Schicht mit Dicke von 2 bis 80 nm, wobei diese Schicht durch mindestens ein Element oder durch ein Oxid aus der Gruppe, die Ge, Si und Oxide von Ti, Zr, Nb und A1 enthält, gebildet ist, die alternativ mit weiteren Elementen dotiert sind, dann eine Reflexionsschicht, die durch mindestens ein Metall oder eine Legierung aus der Gruppe, die Au, Ag, Cu, Al, Cr, Ti, Aluminiumbronze und Legierungen von Au, Ag und Cu enthält, gebildet ist und eine Dicke hat, die maximale mögliche Reflexion des einfallenden sichtbaren Lichtes in Abhängigkeit von dem spektralen Reflexionsvermögen des Materials, aus welchem die Reflexionsschicht gebildet ist, zurück in das transparente Substrat, garantiert, dann eine hineingelegte Schicht mit Dicke von 10 bis 100 nm, wobei diese Schicht durch mindestens ein Metall aus der Gruppe, die Ti, Cr und Cu enthält, gebildet ist, und dann eine Schicht eines Schutzlacks.

2. Dekoratives Substrat nach Anspruch 1, **dadurch gekennzeichnet, dass** es zwischen der optisch modifizierenden Schicht und der Reflexionsschicht eine adhäsive Schicht mit Dicke von 2 bis 15 nm enthält, die durch ein Metalloxid aus der Gruppe, die Al, Ti, Zr und Sn enthält, gebildet ist.

3. Dekoratives Substrat nach Anspruch 1, **dadurch gekennzeichnet, dass** die optisch modifizierende Schicht eine Dicke von 15 bis 40 nm hat.

4. Dekoratives Substrat nach Anspruch 1, **dadurch gekennzeichnet, dass** die Reflexionsschicht eine Dicke von 60 bis 200 nm hat.

5. Dekoratives Substrat nach Anspruch 4, **dadurch gekennzeichnet, dass** die Reflexionsschicht eine Dicke von 90 bis 140 nm hat.

6. Dekoratives Substrat nach Anspruch 1, **dadurch gekennzeichnet, dass** die hineingelegte Schicht eine Dicke von 20 bis 60 nm hat.

7. Dekoratives Substrat nach Anspruch 2, **dadurch gekennzeichnet, dass** die adhäsive Schicht eine Dicke von 3 bis 10 nm hat.

8. Verfahren zum Erreichen eines farbigen Effekts für ein dekoratives transparentes Substrat, insbesondere für einen künstlichen Edelstein, der zur Erhalt des dekorativen Substrats bestimmt wird, nach einem der Ansprüche 1 bis 7, wobei die Hinterseite des transparenten Substrats durch Vakuummetallisierung mit folgenden Schichten bedeckt wird, die die folgende Anordnung beginnend von der Hinterseite des transparenten Substrats haben: eine optisch modifizierende Schicht mit Dicke von 2 bis 80 nm, wobei diese Schicht durch mindestens ein Element oder durch ein Oxid aus der Gruppe, die Ge, Si und Oxide von Ti, Zr, Nb und Al enthält, gebildet wird, die alternativ mit weiteren Elementen dotiert werden, dann eine Reflexionsschicht, die durch mindestens ein Metall oder eine Legierung aus der Gruppe, die Au, Ag, Cu, Al, Cr, Ti, Aluminiumbronze und Legierungen von Au, Ag und Cu enthält, gebildet wird und eine Dicke hat, die maximale mögliche Reflexion des einfallenden sichtbaren Lichtes in Abhängigkeit von dem spektralen Reflexionsvermögen des Materials, aus welchem die Reflexionsschicht gebildet wird, zurück in das transparente Substrat, garantiert, dann eine hineingelegte Schicht mit Dicke von 10 bis 100 nm, wobei diese Schicht durch mindestens ein Metall aus der Gruppe, die Ti, Cr und Cu enthält, gebildet wird, und dann eine Schicht eines Schutzlacks.

9. Verfahren nach Anspruch 8, **dadurch gekennzeichnet, dass** zwischen der optisch modifizierenden Schicht und der Reflexionsschicht eine adhäsive Schicht durch Vakuummetallisierung hineingelegt wird, die eine Dicke von 2 bis 15 nm hat und durch mindestens ein Metalloxid aus einer Gruppe gebildet ist, die Al, Ti, Zr und Sn enthält.

10. Verfahren nach Anspruch 8 oder 9, **dadurch gekennzeichnet, dass** das dekorative Substrat mit hingesetzten Schichten einer thermalen Nachbehandlung unterzogen wird, die 0,5 bis 8 Stunden bei einer Temperatur höher als 150° C, jedoch niedriger als die Temperatur, die eine Beschädigung jeder beliebigen Schicht oder eine unerwünschte Interaktion zwischen den Schichten verursachen kann, dauert.

11. Verfahren nach Anspruch 10, **dadurch gekennzeichnet, dass** das dekorative Substrat mit hingesetzten Schichten einer thermalen Nachbehandlung unterzogen wird, die 0,5 bis 2 Stunden bei einer Temperatur von 160° C bis 280° C dauert.

12. Verfahren nach Anspruch 8, **dadurch gekennzeichnet, dass** die optisch modifizierende Schicht mit einer Dicke von 15 bis 40 nm hingesetzt wird.

13. Verfahren nach Anspruch 8, **dadurch gekennzeichnet, dass** die Reflexionsschicht mit einer Dicke von 60 bis 200 nm, insbesondere mit einer Dicke von 90 bis 140 nm hingesetzt wird.

14. Verfahren nach Anspruch 8, **dadurch gekennzeichnet, dass** die hineingelegte Schicht mit einer Dicke von 20 bis 60 nm hingesetzt wird.

15. Verfahren nach Anspruch 9, **dadurch gekennzeichnet, dass** die adhäsive Schicht mit einer Dicke von 3 bis 10 nm hingesetzt wird.

## Revendications

1. Substrat décoratif, en particulier une pierre artificielle pour bijou possédant un effet de couleur, formé par un substrat transparent qui comprend des couches sur sa face interne où les couches sont déposées et positionnées dans l'ordre suivant à partir de la face interne du substrat : une couche de modification optique possédant une épaisseur de 2 à 80 nm, la couche étant formée par au moins un élément ou par un oxyde d'un groupe comprenant Ge, Si et les oxydes de Ti, Zr, Nb et Al, qui sont alternativement dopés par d'autres éléments, puis une couche de réflexion formée par au moins un métal ou par un alliage d'un groupe comprenant Au, Ag, Cu, Al, Cr, Ti, les bronzes d'aluminium et les alliages de Au, Ag et Cu et possédant une épaisseur permettant la réflexion maximale possible de la lumière visible incidente en fonction de la réflectivité spectrale du matériau à partir duquel la couche de réflexion est retransformée en substrat transparent, puis une couche intercalée possédant une épaisseur de 10 à 100 nm, cette couche étant formée par au moins un métal d'un groupe comprenant Ti, Cr et Cu, puis une couche d'un vernis de protection.

2. Substrat décoratif selon la revendication 1, **caractérisé en ce qu'**il comprend, entre la couche de modification optique et la couche de réflexion, une couche adhésive possédant une épaisseur de 2 à 15 nm, formée par au moins un oxyde métallique d'un groupe de métaux comprenant Al, Ti, Zr et Sn.

3. Substrat décoratif selon la revendication 1, **caractérisé en ce que** la couche de modification optique possède une épaisseur de 15 à 40 nm.

4. Substrat décoratif selon la revendication 1, **caractérisé en ce que** la couche de réflexion possède une épaisseur de 60 à 200 nm.

5. Substrat décoratif selon la revendication 4, **caractérisé en ce que** la couche de réflexion possède une épaisseur de 90 à 140 nm.

6. Substrat décoratif selon la revendication 1, **caractérisé en ce que** la couche intercalée possède une épaisseur de 20 à 60 nm.

7. Substrat décoratif selon la revendication 2, **caractérisé en ce que** la couche adhésive possède une épaisseur de 3 à 10 nm.

8. Procédé pour obtenir un effet de couleur pour un substrat transparent décoratif, en particulier pour une pierre artificielle pour bijou créée pour obtenir le substrat décoratif selon l'une quelconque des revendications 1 à 7, dans lequel la face interne du substrat transparent est enduite par pulvérisation sous vide avec les couches suivantes déposées dans l'ordre suivant à partir de la face interne du substrat: une couche de modification optique possédant une épaisseur de 2 à 80 nm, la couche étant formée par au moins un élément ou par un oxyde d'un groupe comprenant Ge, Si et les oxydes de Ti, Zr, Nb et Al, qui sont alternativement dopés par d'autres éléments, puis une couche de réflexion formée par au moins un métal ou par un alliage d'un groupe comprenant Au, Ag, Cu, Al, Cr, Ti, les bronzes d'aluminium et les alliages de Au, Ag et Cu et possédant une épaisseur permettant la réflexion maximale possible de la lumière visible incidente en fonction de la réflectivité spectrale du matériau à partir duquel la couche de réflexion est retransformée en substrat transparent, puis une couche intercalée possédant une épaisseur de 10 à 100 nm, cette couche étant formée par au moins un métal d'un groupe comprenant Ti, Cr et Cu, puis la face interne est enduite d'une couche d'un vernis de protection.

9. Procédé selon la revendication 8, **caractérisé en ce que**, entre la couche de modification optique et la couche de réflexion, est déposé par pulvérisation sous vide une couche adhésive possédant une épaisseur de 2 à 15 nm, formée par au moins un oxyde métallique d'un groupe de métaux comprenant Al, Ti, Zr et Sn.

10. Procédé selon la revendication 8 or 9, **caractérisé en ce que** le substrat décoratif avec les couches déposées est soumis à un traitement thermique pendant 0,5 à 8 heures à une température supérieure à 150 °C, mais inférieure à la température qui peut provoquer un endommagement de l'une quelconque des couches ou une interaction non souhaitée entre les couches.

11. Procédé selon la revendication 10, **caractérisé en ce que** le substrat décoratif avec les couches déposées est soumis à un traitement thermique pendant 0,5 à 2 heures à une température de 160 °C à 280 °C.

12. Procédé selon la revendication 8, **caractérisé en ce que** la couche de modification optique est déposée avec une épaisseur de 15 à 40 nm.

13. Procédé selon la revendication 8, **caractérisée en ce que** la couche de réflexion est déposée avec une épaisseur de 60 à 200 nm, en particulier avec une épaisseur de 90 à 140 nm.

14. Procédé selon la revendication 8, **caractérisé en ce que** la couche intercalée est déposée avec une épaisseur de 20 à 60 non.

15. Procédé selon la revendication 9, **caractérisé en ce que** la couche adhésive est déposée avec une épaisseur de 3 à 10 nm.
